(19) **Europäisches Patentamt / European Patent Office / Office européen des brevets**

(11) **EP 2 828 825 B1**

(12) **FASCICULE DE BREVET EUROPEEN**

(45) Date de publication et mention de la délivrance du brevet:
**27.04.2016 Bulletin 2016/17**

(21) Numéro de dépôt: **13709900.8**

(22) Date de dépôt: **15.03.2013**

(51) Int Cl.:
*G06T 7/00* (2006.01)

(86) Numéro de dépôt international:
**PCT/EP2013/055320**

(87) Numéro de publication internationale:
**WO 2013/139684 (26.09.2013 Gazette 2013/39)**

(54) **PROCÉDÉ DE DÉTERMINATION D'UN PLAN DU SOL À PARTIR D'UNE IMAGE DE PROFONDEUR**

VERFAHREN ZUR BESTIMMUNG EINER GRUNDEBENE AUS EINEM TIEFENBILD

METHOD FOR DETERMINING THE GROUND PLANE BASED ON A DEPTH IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2012 FR 1252645**

(43) Date de publication de la demande:
**28.01.2015 Bulletin 2015/05**

(73) Titulaire: **Commissariat à l'Énergie Atomique et aux Énergies Alternatives 75015 Paris (FR)**

(72) Inventeurs:
• **ALLEZARD, Nicolas**
  **F-75014 Paris (FR)**
• **HERVIEU, Alexandre**
  **F-75020 Paris (FR)**
• **LUCAT, Laurent**
  **F-72550 Fay (FR)**

(74) Mandataire: **Hammes, Pierre**
  **Marks & Clerk France**
  **Immeuble Visium**
  **22, avenue Aristide Briand**
  **94117 Arcueil Cedex (FR)**

(56) Documents cités:
**US-B1- 7 741 961**

• MOLTON N ET AL: "A stereo vision-based aid for the visually impaired", IMAGE AND VISION COMPUTING ELSEVIER NETHERLANDS, vol. 16, no. 4, 3 avril 1998 (1998-04-03), pages 251-263, XP002689530, ISSN: 0262-8856
• ANGEL D SAPPA ET AL: "Real Time Vehicle Pose Using On-Board Stereo Vision System", 1 janvier 2006 (2006-01-01), IMAGE ANALYSIS AND RECOGNITION LECTURE NOTES IN COMPUTER SCIENCE;;LNCS, SPRINGER, BERLIN, DE, PAGE(S) 205 - 216, XP019043780, ISBN: 978-3-540-44894-5 abrégé section 3
• SE S ET AL: "Stereo vision-based obstacle detection for partially sighted people", COMPUTER VISION - ACCV '98. THIRD ASIAN CONFERENCE ON COMPUTER VISION. PROCEEDINGS SPRINGER-VERLAG BERLIN, GERMANY, vol. 1, 1997, page 152, XP002689531, ISBN: 3-540-63930-6
• ONIGA F ET AL: "Processing Dense Stereo Data Using Elevation Maps: Road Surface, Traffic Isle, and Obstacle Detection", IEEE TRANSACTIONS ON VEHICULAR TECHNOLOGY, IEEE SERVICE CENTER, PISCATAWAY, NJ, US, vol. 59, no. 3, 1 mars 2010 (2010-03-01), pages 1172-1182, XP011299067, ISSN: 0018-9545

**EP 2 828 825 B1**

## Description

L'invention se situe dans le domaine du traitement d'images appliqué à la détection de cibles et, plus précisément, dans le domaine de l'estimation du plan du sol dans des images. Elle concerne un procédé d'estimation d'un ensemble de paramètres définissant un plan du sol à partir d'une image de profondeur.

Avec l'augmentation du trafic routier et la demande croissante d'un renforcement de la sécurité des biens et des personnes, la recherche scientifique s'est intensifiée depuis au moins une dizaine d'années sur les systèmes d'aide à la conduite, en particulier les systèmes de détection d'objets dans des images, qu'il s'agisse d'objets d'intérêt tels que des panneaux de signalisation, ou d'obstacles tels que des piétons. La détection d'objets dans des images est grandement facilitée par la connaissance de l'environnement tridimensionnel des objets. La principale information de contexte utile pour la détection d'objets est la localisation du plan du sol dans les images. La connaissance de cette information permet notamment de concentrer la recherche d'objets sur les zones de l'image où la probabilité de détection est la plus forte, de déterminer la dimension des objets à rechercher (par exemple en fonction d'une taille moyenne de personne), et de déterminer si un objet détecté est situé ou non sur le sol. Le plan du sol peut être déterminé à partir d'une image de profondeur, elle-même obtenue par exemple à partir d'un couple d'images stéréoscopiques. Comme tout plan de l'espace tridimensionnel, le plan du sol peut être défini mathématiquement par trois paramètres indépendants. A titre d'exemple, ces paramètres peuvent être la hauteur h des caméras par rapport au sol, l'angle $\theta$ formé entre l'axe de chaque caméra et le plan du sol, et l'angle $\varphi$ formé entre le plan du sol et l'axe passant par les centres optiques des caméras.

Dans le cadre d'un système de détection d'obstacles embarqué sur un véhicule automobile, le plan du sol est susceptible d'évoluer par rapport à l'axe des caméras en fonction du relief du sol (par exemple la route) sur lequel évolue le véhicule, du chargement du véhicule, et des accélérations qu'il subit. En outre, la position et l'orientation des caméras par rapport au véhicule peuvent varier en raison de secousses ou de chocs. Le plan du sol ne peut donc généralement pas être estimé une fois pour toutes pour une configuration donnée des caméras. Il existe ainsi un besoin de déterminer dynamiquement le plan du sol dans les images, c'est-à-dire pour chaque couple d'images stéréoscopiques ou au moins à intervalles de temps réguliers.

L'article "A stereo vision-based aid for the visually impaired", par N. Molton, décrit une méthode de détermination de plan du sol basée sur d'une séquence d'images stéréoscopiques.

Les méthodes pour estimer le plan du sol à partir d'une image de profondeur utilisent souvent un calcul de v-disparité. Ce calcul implique, d'une part, la construction d'un histogramme bidimensionnel représentant la relation entre la profondeur et la position verticale des points de l'image de disparité et, d'autre part, la détermination de l'angle $\theta$ et de la hauteur h par une transformée de Hough. Un tel calcul de v-disparité est par exemple décrit dans R. Labayrade, D. Aubert, J.-P. Tarel : "Real Time Obstacle Detection in Stereovision on Non Flat Road Geometry Through "V-Disparity" Representation", IEEE Intelligent Vehicles Symposium, Versailles, France, pp. 646-650, 2002. Le calcul est généralisable à la détermination des deux angles $\theta$ et $\varphi$, à l'aide d'un histogramme tridimensionnel et d'une transformée de Hough généralisée. Par ailleurs, les paramètres $\theta$, $\varphi$ et h peuvent être déterminés individuellement afin de minimiser le temps de calcul et la mémoire requise. Par exemple, l'article de N. Suguma, M. Shimoyama et N. Fujirawa : "Obstacle Détection Using Virtual Disparity Image for Non-Flat Road", IEEE Intelligent Vehicles Symposium, Eindhoven, The Netherlands, pp. 596-601, 2008, décrit une méthode où les paramètres $\theta$ et h sont déterminés à partir d'une transformée de Hough dans l'espace d-v, et où le paramètre $\theta$ est déterminé ensuite par une transformée de Hough dans l'espace u-v, où d désigne la disparité et (u,v) les coordonnées de l'image de l'une des deux caméras.

De manière générale, les méthodes utilisant un calcul de v-disparité permettent d'estimer le plan du sol avec une certaine robustesse vis-à-vis de la présence d'obstacles verticaux de faibles dimensions, c'est-à-dire représentés par un nombre relativement faible de pixels dans l'image de disparité. Tel est notamment le cas en présence de personnes debout. En revanche, lorsque la présence d'objets verticaux devient trop importante, par exemple si un mur est présent dans l'image, les méthodes d'estimation peuvent fournir des résultats aberrants, par exemple le plan du mur dans l'image. Par ailleurs, ces méthodes sont également très dépendantes de la quantité et de la qualité des données de profondeur des pixels. Ces données de profondeur sont généralement calculées par un algorithme de mise en correspondance de deux images stéréoscopiques acquises simultanément. La mise en correspondance de pixels entre les deux images stéréoscopiques n'est possible que si ces images présentent des zones texturées, c'est-à-dire si des points de la scène observée peuvent être facilement identifiés dans chacune des images. Or certaines scènes n'engendrent que très peu de zones texturées. Ainsi, la précision de l'estimation du plan du sol peut devenir insuffisante voire impossible pour certaines scènes.

Afin de réduire l'impact de ces deux problèmes, il est possible d'introduire des contraintes topologiques et/ou des contraintes temporelles dans les méthodes d'estimation du plan du sol. L'introduction de contraintes topologiques consiste à filtrer les résultats, en l'occurrence les paramètres définissant le plan du sol, selon qu'ils tombent ou non dans des plages de valeurs acceptables. Ces plages de valeurs doivent être déterminées en fonction du contexte d'utilisation, notamment selon que le sol est susceptible d'être horizontal ou incliné, selon qu'il peut ou non présenter des trous et des bosses, selon que le véhicule possède des suspensions souples ou fermes, selon qu'il peut ou non être chargé, etc. L'introduction de contraintes temporelles consiste à exploiter la cohérence entre l'estimation d'une image et celle d'une image antérieure. Typiquement, il s'agit d'autoriser une variation en quantité limitée entre deux estimations.

A titre d'exemple, dans l'article cité plus haut de N. Suguma, M. Shimoyama et N. Fujirawa : "Obstacle Detection Using Virtual Disparity Image for Non-Flat Road", IEEE Intelligent Vehicles Symposium, Eindhoven, The Netherlands, pp. 596-601, 2008, la méthode d'estimation du plan du sol intègre des contraintes topologiques sur la hauteur des caméras par rapport au sol. En l'occurrence, seuls les points correspondant à une hauteur comprise entre deux bornes fixes sont pris en considération pour la détermination du plan du sol. De même, dans l'article de F. Oniga et S. Nedevschi : "Processing Dense Stereo Data Using Elevation Maps : Road Surface, Traffic Isle, and Obstacle Detection", IEEE Tr. On Vehicular Technology, Vol. 59, No. 3, pp. 1172-1182, 2010, une méthode est présentée dans laquelle les points sont classifiés comme appartenant ou non à la route selon des marges fixes prédéfinies. L'introduction de contraintes topologiques dans ces méthodes permet certes d'améliorer l'estimation du plan du sol et, par suite, la détection d'obstacles lors d'une circulation sur la route. Néanmoins, ces contraintes topologiques reposent sur des paramètres fixes, déterminés préalablement à l'exploitation des méthodes d'estimation en fonction du contexte applicatif visé. Par conséquent, ces méthodes d'estimation ne sont plus fiables dès que l'environnement s'écarte significativement de l'environnement nominal.

Un but de l'invention est notamment de remédier à tout ou partie des inconvénients précités en adaptant les contraintes topologiques et temporelles en fonction d'une estimation de la qualité des données de l'image et d'une estimation de la qualité du plan du sol estimé pour l'image précédente. A cet effet, l'invention a pour objet un procédé de détermination d'un triplet de paramètres définissant un plan du sol dans un repère tridimensionnel à partir d'une image de profondeur prise dans une séquence d'images. Le procédé comprend :

- une étape de sélection de points valides dans l'image de profondeur courante, les points valides étant les points de l'image dont une distance à un point origine du repère tridimensionnel est comprise entre une distance minimale prédéterminée et une distance maximale prédéterminée,
- une étape de détermination d'un indicateur $R_{3d}$ pour l'image de profondeur courante, ledit indicateur étant fonction du nombre de points valides dans l'image de profondeur courante, et du nombre total de points dans cette image,
- une étape de sélection d'un ensemble de points d'intérêt dans l'image de profondeur courante, chaque point d'intérêt étant sélectionné si une distance entre ledit point d'intérêt et le plan du sol déterminé pour une image antérieure de la séquence est inférieure à un seuil $d_{sel}$,
- une étape de détermination d'un triplet de paramètres filtrés spatialement à partir de points d'intérêt, et
- une étape de détermination d'un triplet de paramètres filtrés temporellement en fonction de l'indicateur $R_{3d}$ déterminé pour l'image de profondeur courante ou pour une image antérieure de la séquence.

L'invention a notamment pour avantage qu'elle permet d'adapter la détermination d'un plan du sol à tout type d'environnement, quelles que soient la quantité de zones texturées dans l'image, la rugosité et la planéité du sol, et l'évolution de son inclinaison.

Avantageusement, le procédé selon l'invention comprend également une étape de détermination d'un indicateur $R_{pl}$ pour l'image de profondeur courante, ledit indicateur étant fonction du nombre de points dans ladite image dont la distance au plan du sol défini par le triplet de paramètres filtrés spatialement est inférieure à une distance $d_p$ prédéterminée, et du nombre de points valides dans cette image. Ainsi, l'étape de détermination du triplet de paramètres filtrés temporellement peut aussi dépendre de l'indicateur $R_{pl}$ déterminé pour l'image de profondeur courante ou pour une image antérieure de la séquence.

L'étape de détermination du triplet de paramètres filtrés temporellement comporte par exemple une sous-étape de détermination d'un paramètre d'innovation K, ledit paramètre étant :

- égal à zéro si l'indicateur $R_{3d}$ déterminé pour l'image de profondeur courante ou pour une image antérieure de la séquence est inférieur à un seuil prédéterminé $S_{3d}$, ou si l'indicateur $R_{pl}$ déterminé pour l'image de profondeur courante ou pour une image antérieure de la séquence est inférieur à un seuil prédéterminé $S_{pl}$,
- égal à la valeur de l'indicateur $R_{pl}$ déterminé pour l'image de profondeur courante ou pour une image antérieure de la séquence, moins la valeur du seuil prédéterminé $S_{pl}$ sinon.

Chaque paramètre filtré temporellement $V_t$ peut alors être déterminé en fonction du paramètre d'innovation K, du paramètre filtré temporellement déterminé pour la précédente image de la séquence $V_{t-1}$, et du paramètre filtré spatialement déterminé pour l'image de profondeur courante de la séquence $V_s$.

Plus précisément, chaque paramètre filtré temporellement $V_t$ peut être déterminé par la relation $V_t = V_{t-1}.(1-K) + V_s.K$.

Selon une forme particulière de réalisation, l'étape de détermination d'un triplet de paramètres filtrés spatialement comprend :

- une sous-étape de détermination de plusieurs triplets de paramètres à partir de l'ensemble de points d'intérêt, et
- une sous-étape de sélection, pour chaque type de paramètre, des paramètres dont la valeur est comprise dans une plage de validité paramétrable, la plage de validité de chaque type de paramètre étant centrée sur la valeur de ce paramètre déterminée pour une image antérieure de la séquence, et sa largeur étant déterminée en fonction de l'indicateur $R_{pl}$ déterminé pour une image antérieure de la séquence, et de l'indicateur $R_{3d}$ déterminé pour l'image courante ou pour une image antérieure de la séquence.

La sous-étape de détermination de plusieurs triplets de paramètres comprend par exemple les sous-étapes suivantes :

- détermination pseudoaléatoire de plusieurs triplets de points dans l'ensemble de points d'intérêts,
- détermination, pour chaque triplet de points, d'un triplet de paramètres définissant un plan du sol passant par les trois points.

L'étape de détermination d'un triplet de paramètres filtrés spatialement peut comprendre, en outre :

- une sous-étape de détermination, pour chaque type de paramètre, d'un paramètre moyen dont la valeur est égale à une valeur moyenne des paramètres sélectionnés, lesdits paramètres moyens définissant un plan du sol moyen $P_m$,
- une sous-étape de sélection d'un ensemble de points de calcul parmi les points d'intérêt, les points de calcul étant les points d'intérêt dont une distance avec le plan du sol moyen $P_m$ est inférieure à une distance prédéterminée $d_g$,
- une sous-étape de détermination du triplet de paramètres filtrés spatialement à partir des points de calcul.

Le triplet de paramètres filtrés spatialement peut notamment être déterminé par la méthode des moindres carrés appliquée aux distances entre les points de calcul et le plan du sol moyen $P_m$.
Selon une forme particulière de réalisation, la largeur de la plage de validité de chaque paramètre est :

- augmentée si l'indicateur $R_{pl}$ déterminé pour une image antérieure de la séquence est inférieur à un seuil $S_{pl2}$ prédéterminé et si l'indicateur $R_{3d}$ déterminé pour l'image courante ou pour une image antérieure de la séquence est supérieur à un seuil $S_{3d2}$ prédéterminé,
- diminuée si l'indicateur $R_{pl}$ déterminé pour une

image antérieure de la séquence est supérieur au seuil $S_{pl2}$ prédéterminé, et
- inchangée sinon.

La diminution et l'augmentation de la largeur de la plage de validité peuvent être bornées.
Selon une forme particulière de réalisation, le seuil $d_{sel}$ à partir duquel est déterminé l'ensemble de points d'intérêt est fonction du critère $R_{pl}$ déterminé pour plusieurs images antérieures de la séquence. Les points valides de l'image de profondeur courante sont alors sélectionnés comme points d'intérêt si le critère $R_{pl}$ déterminé pour plusieurs images antérieures de la séquence est inférieur à un seuil $S_{sel}$ prédéterminé.
Le procédé peut comprendre une étape supplémentaire de détermination d'un indicateur $Q_p$, représentatif de la qualité du plan du sol déterminé pour l'image de profondeur courante, ledit indicateur $Q_p$ étant déterminé en fonction des indicateurs $R_{3d}$ et $R_{pl}$ déterminés pour l'image de profondeur courante.
En particulier, l'indicateur $Q_p$ peut être déterminé par la relation

$$Q_p = \frac{R_{pl}}{1 + exp\big(g.(S_{3d} - R_{3d})\big)},$$

où $g$ est un nombre réel compris entre 10 et 100, et $S_{3d}$ est un seuil prédéterminé.
L'indicateur $R_{pl}$ d'une image de profondeur est par exemple égal au nombre de points dans ladite image dont la distance au plan du sol défini par le triplet de paramètres filtrés spatialement est inférieure à la distance $d_p$ prédéterminée, sur le nombre de points valides dans cette image. L'indicateur $R_{3d}$ d'une image de profondeur peut quant à lui être égal au nombre de points valides dans cette image sur le nombre total de points dans cette image.
L'invention sera mieux comprise et d'autres avantages apparaîtront à la lecture de la description qui va suivre, faite en regard de dessins annexés sur lesquels :

- la figure 1 représente schématiquement un exemple de système permettant de mettre en oeuvre le procédé de détermination d'un plan du sol selon l'invention ;
- la figure 2 représente un exemple d'étapes mises en oeuvre dans le procédé de détermination d'un plan du sol selon l'invention ;
- la figure 3 représente un exemple particulier de réalisation de l'étape de détermination d'un triplet de paramètres filtrés temporellement ;
- la figure 4 représente un exemple de réalisation de l'étape de détermination d'un triplet de paramètres filtrés spatialement.

Dans le cadre de l'invention, on cherche à déterminer le plan du sol, par exemple une route, dans un repère tridimensionnel à partir d'une image numérique. Cette image numérique peut être une image de disparité, également appelée carte de disparité, ou une image de profondeur. Une image de disparité est une image obtenue par un traitement d'image à partir de deux images stéréoscopiques, c'est-à-dire des images issues de deux caméras vidéo observant une même scène. Les caméras vidéo sont orientées de manière sensiblement identique, mais elles sont positionnées à distance l'une de l'autre. Ainsi, les axes optiques des deux caméras sont sensiblement parallèles. Si tel n'est pas le cas, une correction est réalisée pour rendre les axes optiques parallèles. Le traitement d'image consiste à déterminer les couples de points correspondants dans les deux images. La disparité d'un point est alors définie comme étant la différence de position entre le point dans l'image de la première caméra, considérée comme image de référence, et ce même point dans l'image de la deuxième caméra. À partir de l'information de disparité $d$, et connaissant la distance $B$ entre les deux caméras et leur distance focale $f$, il est possible de déterminer la profondeur $p$ du point considéré par la formule $p = B.f/d$. L'image contenant ces informations de profondeur est appelée image de profondeur. Pour la suite de la description, il est considéré que l'image de profondeur à partir de laquelle est déterminé le plan du sol est issue d'images stéréoscopiques. Cependant, l'image de profondeur pourrait également être obtenue en associant à une caméra vidéo un capteur de distance apte à fournir une information de profondeur pour au moins une partie des points dans l'image.

Pour la suite de la description, on considère aussi que la détermination d'un plan est équivalente à la détermination d'un triplet de paramètres. En effet, tout plan peut être défini dans un repère tridimensionnel par trois paramètres indépendants les uns des autres. Dans un repère cartésien par exemple, un plan peut être modélisé par l'équation A.x + B.y + C.z + D = 0, soit, après normalisation, A'.x + B'.y + C'.z + 1 = 0. Les paramètres sont alors A', B' et C'. Dans un repère sphérique, un plan peut aussi être représenté par trois paramètres indépendants, par exemple une distance et deux angles. On considère également que le plan est déterminé dans un repère lié à la caméra fournissant l'image de référence, l'origine de ce repère étant le centre optique de cette caméra, et que les paramètres définissant le plan du sol sont la *hauteur h* de l'une des caméras par rapport au sol, l'angle $\theta$ formé entre l'axe optique de cette caméra et le plan du sol, et l'angle $\varphi$ formé entre le plan du sol et l'axe passant par les centres optiques des deux caméras.

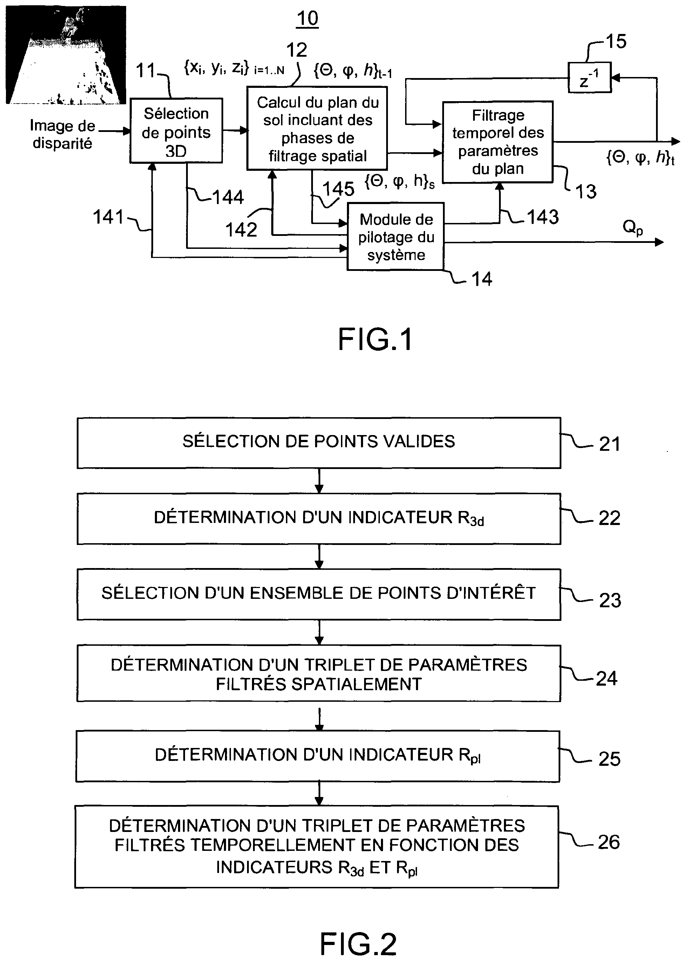

La figure 1 représente schématiquement un exemple de système permettant de mettre en oeuvre le procédé de détermination d'un plan du sol à partir d'une image de profondeur prise dans une séquence d'images. Le procédé pourrait également s'appuyer sur une image de disparité, telle que celle représentée sur la figure 1, dans la mesure où la relation entre l'information de disparité et celle de profondeur est bijective. En particulier, cette relation est linéaire, ce qui implique notamment qu'un plan dans l'image de disparité est aussi un plan dans l'image de profondeur. Le système 10 comprend un module 11 de sélection de points tridimensionnels (3D), un module 12 de calcul du plan du sol, un module 13 de filtrage temporel et un module 14 de pilotage du système. Le module 11 reçoit les images de profondeur et sélectionne dans chaque image un ensemble de N points d'intérêt, noté $\{x_i,y_i,z_i\}_{i\in[1,N]}$, qu'il transfère au module 12. Le module 12 détermine pour chaque image de profondeur un plan du sol à partir des points d'intérêt. En particulier, le module 12 détermine pour chaque image un triplet de paramètres définissant un plan du sol. La détermination d'un triplet de paramètres inclut des étapes de filtrage spatial, comme expliqué en détail ci-dessous. En conséquence, le triplet de paramètres issu du module 12 est appelé triplet de paramètres filtrés spatialement, et est noté $\{\theta,\varphi,h\}_s$. Le triplet de paramètres $\{\theta,\varphi,h\}_s$ est transféré au module 13, lequel détermine un nouveau triplet de paramètres définissant un plan du sol. Cette détermination du nouveau triplet de paramètres inclut une étape de filtrage temporel. Le nouveau triplet de paramètres issu du modèle 13 est appelé triplet de paramètres filtrés temporellement, et est noté $\{\theta,\varphi,h\}_t$. Plus précisément, le module 13 détermine le nouveau triplet de paramètres $\{\theta,\varphi,h\}_t$ à partir du triplet de paramètres $\{\theta,\varphi,h\}_s$ déterminé pour l'image courante de la séquence, et du triplet de paramètres $\{\theta,\varphi,h\}_{t-1}$ déterminé par le module 13 pour la précédente image de la séquence. Un module 15 de retard représente la réinjection du triplet de paramètres $\{\theta,\varphi,h\}_t$ pour l'image suivante de la séquence. Pour une image de profondeur courante, le triplet de paramètres $\{\theta,\varphi,h\}_t$ correspond au triplet de paramètres finalement estimé.

Le procédé de détermination d'un plan du sol faisant l'objet de l'invention implique d'une part un filtrage spatial des points de l'image servant à la détermination des paramètres du plan du sol et/ou un filtrage spatial de ces paramètres et, d'autre part, un filtrage temporel des paramètres du plan du sol. Il se caractérise essentiellement en ce que le filtrage temporel des paramètres est fonction d'un indicateur $R_{3d}$ représentatif de la qualité des données disponibles pour la détermination du plan du sol. Avantageusement, le filtrage temporel des paramètres est aussi fonction d'un indicateur $R_{pl}$ représentatif de la qualité du plan du sol déterminé après filtrage spatial. De même, le filtrage spatial peut aussi être paramétré en fonction des indicateurs $R_{3d}$ et $R_{pl}$. Ainsi, le filtrage spatial et le filtrage temporel peuvent être adaptés en fonction de la qualité des données disponibles et de la qualité des plans du sol déterminés au préalable pour les différentes images de la séquence. Plus généralement, l'invention met en oeuvre l'idée selon laquelle plus le plan estimé pour une image de profondeur permet "d'expliquer" les points de cette image, plus les plans des images suivantes pourront être déterminés avec précision. En particulier, pour le filtrage spatial, cela implique une recherche du plan du sol dans un espace plus limité et, pour le filtrage temporel, une prise en compte moins importante des plans du sol estimés au préalable.

La figure 2 représente un exemple d'étapes mises en oeuvre dans le procédé de détermination d'un plan du sol selon l'invention. Dans une première étape 21, on sélectionne les points de l'image de profondeur courante dont la distance avec l'origine du repère tridimensionnel est comprise entre une distance minimale $D_{min}$ et une distance maximale $D_{max}$. Ces points sont appelés points valides. L'origine du repère correspond par exemple au centre du plan image de l'image de profondeur, ou au centre optique de l'une des caméras. Pour les zones de l'image très peu texturées, l'information de profondeur ne peut pas être déterminée. Par convention, la profondeur de ces points est généralement fixée à la valeur infinie, ou à la valeur maximale pouvant être quantifiée. Ces points ne sont donc pas considérés comme valides. Par ailleurs, il est considéré que les points les plus éloignés possèdent une information de distance insuffisante pour pouvoir être pris en compte dans la détermination du plan du sol. Enfin, les points de l'image dont la distance est relativement faible correspondent en général à des obstacles, par exemple des piétons. Les points les plus proches et les plus éloignés ne sont donc pas pris en compte pour la détermination du plan du sol. À titre d'exemple, les distances minimale et maximale ont des valeurs de 1 mètre (m) et 5 m, respectivement. Dans une deuxième étape 22, l'indicateur $R_{3d}$ est déterminé pour l'image de profondeur courante. Cet indicateur est déterminé en fonction du nombre de points valides dans l'image de profondeur courante, et du nombre total de points dans cette image. Il est par exemple égal au rapport du nombre de points valides dans l'image de profondeur courante, sur le nombre total de points dans cette image. L'indicateur $R_{3d}$ permet ainsi d'estimer la qualité des données 3D ou, plus précisément, la proportion de points de l'image potentiellement utiles pour la détermination du plan du sol. Dans une troisième étape 23, on sélectionne, parmi les points valides, un ensemble de points d'intérêt dans l'image de profondeur courante. Un point d'intérêt est sélectionné si une distance entre ce point et le plan du sol déterminé pour la précédente image de la séquence est inférieure à une distance seuil $d_{sel}$. Par distance entre un point et un plan, on entend la hauteur du point par rapport au plan. Le plan du sol considéré peut aussi être déterminé à partir des plans déterminés pour plusieurs images antérieures de la séquence. Il s'agit par exemple d'une moyenne des plans du sol déterminés pour les images précédentes de la séquence. La valeur de la distance seuil est par exemple égale à 0,3 m. L'étape 23 permet d'éliminer les points de l'image n'appartenant a priori pas au plan du sol, tels que les points représentant des panneaux de signalisation ou des piétons. Dans une quatrième étape 24, le triplet de paramètres filtrés spatialement $\{\theta,\varphi,h\}_s$ est déterminé à partir de l'ensemble de points d'intérêt. Ce triplet de paramètres définit un plan du sol filtré spatialement $P_s$. Un

exemple de réalisation de l'étape 24 est détaillé ci-dessous. Dans une étape 25, l'indicateur $R_{pl}$ est déterminé pour l'image de profondeur courante. Cet indicateur $R_{pl}$ est fonction du nombre de points dans l'image dont la distance au plan du sol $P_s$ est inférieure à une distance $d_p$ prédéterminée, et du nombre de points valides dans cette image. Il est par exemple égal au rapport du nombre de points dans l'image dont la distance au plan du sol $P_s$ est inférieure à la distance $d_p$ prédéterminée, sur le nombre de points valides dans cette image. La valeur de la distance $d_p$ est par exemple égale à 0,1 m. L'indicateur $R_{pl}$ permet ainsi d'estimer la qualité du plan du sol $P_s$ déterminé ou, plus précisément, la proportion entre le nombre de points de l'image proches du plan $P_s$, et le nombre de points de l'image potentiellement utiles pour sa détermination. Dans une étape 26, le triplet de paramètres filtrés temporellement $\{\theta,\varphi,h\}_t$ est déterminé pour l'image de profondeur courante à partir du triplet de paramètres $\{\theta,\varphi,h\}_s$ déterminé pour cette image, du triplet de paramètres filtrés temporellement $\{\theta,\varphi,h\}_{t-1}$ déterminé pour une image antérieure de la séquence, et de l'indicateur $R_{3d}$ déterminé pour l'image courante ou pour une image antérieure de la séquence. Le triplet de paramètres $\{\theta,\varphi,h\}_{t-1}$ est par exemple celui déterminé pour la précédente image de la séquence. Le triplet de paramètres filtrés temporellement $\{\theta,\varphi,h\}_t$ définit un plan du sol filtré temporellement $P_t$. Selon une forme de réalisation particulièrement avantageuse, le plan du sol $P_t$ est également déterminé en fonction de l'indicateur $R_{pl}$ déterminé pour l'image de profondeur courante ou pour une image antérieure de la séquence.

Selon une forme particulière de réalisation, la distance seuil $d_{sel}$ est fonction du critère $R_{pl}$ déterminé pour plusieurs images antérieures de la séquence. En particulier, si le critère $R_{pl}$ déterminé pour chacune des précédentes images de la séquence est inférieur à un seuil prédéterminé $S_{sel}$, alors l'ensemble des points valides de l'image de profondeur courante peuvent être sélectionnés comme points d'intérêt. Autrement dit, le filtrage des points valides est désactivé. Le nombre d'images pour lequel le filtrage des points valides est désactivé correspond par exemple à une durée de l'ordre de 1 ou 2 secondes. Le filtrage des points valides peut être activé à nouveau dès que le critère $R_{pl}$ dépasse le seuil $S_{sel}$.

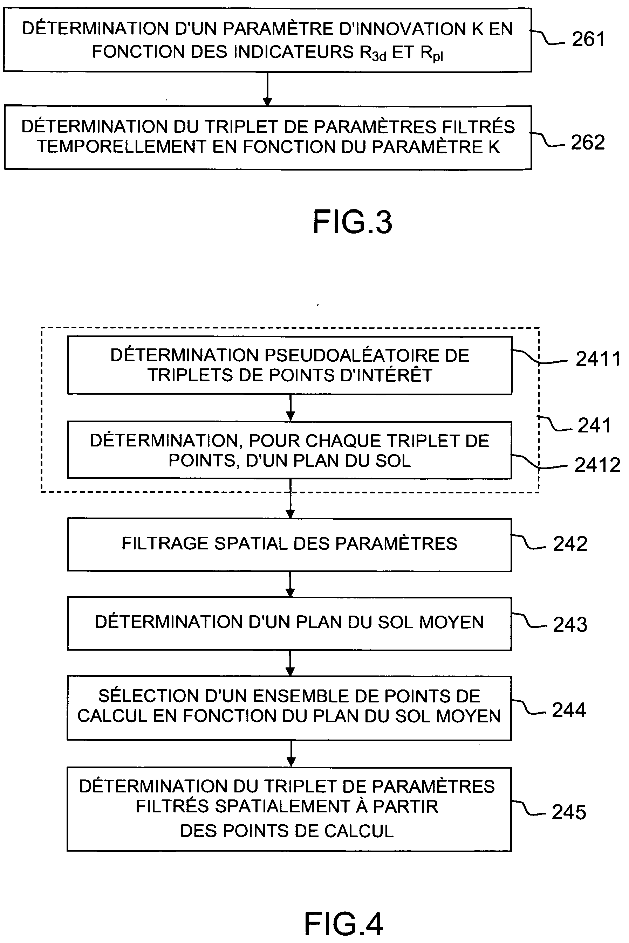

La figure 3 représente un exemple particulier de réalisation de l'étape 26 de détermination du triplet $\{\theta,\varphi,h\}_t$. Dans cet exemple, on considère que chaque paramètre $\theta$, $\varphi$, $h$ est filtré individuellement. On note $V_t$ l'un des paramètres du triplet $\{\theta, \varphi, h\}_t$, $V_{t-1}$ le paramètre du même type dans le triplet $\{\theta,\varphi,h\}_{t-1}$ déterminé pour la précédente image de la séquence, et $V_s$ le paramètre du même type dans le triplet $\{\theta,\varphi,h\}_s$. On considère un seuil prédéterminé $S_{3d}$ et un seuil prédéterminé $S_{pl}$. Dans une première sous-étape 261, un paramètre d'innovation K est déterminé. Si l'indicateur $R_{3d}$ déterminé pour l'image de profondeur courante est inférieur au seuil $S_{3d}$, alors la valeur du paramètre d'innovation K est fixée à zéro. À l'inverse, si l'indicateur $R_{3d}$ est supérieur au seuil $S_{3d}$,

alors la valeur du paramètre d'innovation est déterminée en fonction de l'indicateur $R_{pl}$. Si l'indicateur $R_{pl}$ est inférieur au seuil $S_{pl}$, alors la valeur du paramètre d'innovation K est fixée à zéro. Si l'indicateur $R_{pl}$ est supérieur au seuil $S_{pl}$, alors la valeur du paramètre d'innovation est fixée pour être égale à la valeur de l'indicateur $R_{pl}$, moins la valeur du seuil $S_{pl}$ $(K = R_{pl} - S_{pl})$. Dans une deuxième sous-étape 262, chaque paramètre $V_t$ est déterminé en fonction du paramètre $V_{t-1}$ correspondant, du paramètre $V_s$ correspondant, et du paramètre d'innovation K. La relation permettant de déterminer les paramètres $V_t$ peut prendre diverses formes. Elle peut notamment être linéaire ou non, être continue ou non. À titre d'exemple, la relation suivante peut être utilisée :

$$V_t = V_{t-1}.\,(1 - K) + V_s.\,K$$

Ainsi, la valeur de chaque paramètre n'est actualisée pour une image de la séquence que si cette image dispose de suffisamment de points valides, et si un nombre significatif de points valides se trouvent à proximité du plan $P_s$ déterminé pour cette image. Le seuil $S_{3d}$ peut par exemple prendre la valeur 0,2 et le seuil $S_{pl}$ la valeur 0,1.

Selon une forme particulière de réalisation, si l'indicateur $R_{3d}$ reste inférieur au seuil $S_{3d}$ pour un nombre prédéterminé d'images antérieures de la séquence, alors le triplet de paramètres filtrés temporellement $\{\theta,\varphi,h\}_t$ est réinitialisé avec des paramètres initiaux $\theta_0$, $\varphi_0$ et $h_0$. Ces paramètres initiaux $\theta_0$, $\varphi_0$ et $h_0$ sont déterminés préalablement à la mise en oeuvre du procédé de détermination du plan du sol.

L'étape 24 de détermination du triplet de paramètres filtrés spatialement $\{\theta,\varphi,h\}_s$ peut également être fonction de l'indicateur $R_{3d}$ déterminée pour l'image de profondeur courante ou pour une image antérieure de la séquence, et/ou de l'indicateur $R_{pl}$ déterminé pour une image antérieure de la séquence. La figure 4 représente un tel exemple de réalisation de l'étape 24 de détermination du triplet de paramètres filtrés spatialement $\{\theta,\varphi,h\}_s$. Dans une première sous-étape 241, plusieurs triplets de paramètres sont déterminés à partir de l'ensemble de points d'intérêt. Plus précisément, la sous-étape 241 comprend par exemple les étapes suivantes. Dans une étape 2411, on détermine de manière pseudoaléatoire M triplets de points dans l'ensemble de points d'intérêt. Dans une deuxième étape 2412, on détermine, pour chaque triplet de points, un triplet de paramètres $\{\theta,\varphi,h\}_j$ définissant un plan du sol $P_j$ passant par les trois points, où j est un entier compris entre 1 et M. Dans une deuxième sous-étape 242, lesdits triplets de paramètres sont filtrés spatialement en fonction des indicateurs $R_{pl}$ et $R_{3d}$. Autrement dit, les paramètres sont sélectionnés ou non en fonction de leur valeur et des indicateurs $R_{pl}$ et $R_{3d}$. La sous-étape 242 utilise par exemple des plages de validité paramétrables, une plage de validité étant associée à chaque type de paramètre. La plage de validité d'un type de paramètre est centrée sur la valeur du paramètre considéré déterminé pour une image antérieure de la séquence, par exemple la précédente image de la séquence. Pour la première image de la séquence, il est possible de considérer les paramètres initiaux $\theta_0$, $\varphi_0$, et $h_0$. La largeur de la plage est déterminée en fonction de l'indicateur $R_{pl}$ déterminé pour une image antérieure de la séquence, et de l'indicateur $R_{3d}$ déterminé pour l'image courante ou pour une image antérieure de la séquence. A titre d'exemple, on considère des largeurs de plages initiales $\Delta\theta_0$, $\Delta\varphi_0$ et $\Delta h_0$. Ces largeurs de plages sont associées à la première image de la séquence. A chaque nouvelle image, la largeur des plages peut être augmentée ou diminuée en fonction des indicateurs $R_{3d}$ et $R_{pl}$. Par exemple, les largeurs de plages sont augmentées de 20% si l'indicateur $R_{pl}$ est inférieur à un seuil $S_{pl2}$ et si l'indicateur $R_{3d}$ est supérieur à un seuil $S_{3d2}$. Elles sont diminuées de 20% si l'indicateur $R_{pl}$ est supérieur au seuil $S_{pl2}$, et inchangées sinon. De plus, la variation des largeurs de plages peut être bornée. L'augmentation est par exemple limitée à 150% des largeurs de plages initiales $\Delta\theta_0$, $\Delta\varphi_0$ et $\Delta h_0$, et la diminution à 70% de ces largeurs de plages. Les paramètres dont la valeur est comprise dans la plage de validité correspondante sont appelés paramètres sélectionnés. Dans une troisième sous-étape 243, un paramètre moyen $\theta_m$, $\varphi_m$ et $h_m$ est déterminé pour chaque type de paramètre. Ces paramètres moyens définissent un plan du sol moyen $P_m$. La valeur de chaque paramètre moyen $\theta_m$, $\varphi_m$ et $h_m$ est une moyenne des valeurs des paramètres sélectionnés. Il s'agit par exemple d'une moyenne arithmétique ou quadratique. Selon une forme particulière de réalisation, un histogramme est construit pour chaque type de paramètre. Un histogramme comporte des classes dont la largeur correspond à une plage de valeurs pour le paramètre considéré. Chaque paramètre du triplet $\{\theta, \varphi, h\}_j$ est classé dans l'une des classes de l'histogramme. L'étape 242 de filtrage spatial consiste alors à appliquer les plages de validité sur les histogrammes, chaque plage de validité définissant une borne inférieure et une borne supérieure, et à ne conserver que les triplets de paramètres $\{\theta, \varphi, h\}_j$ pour lesquels les trois paramètres sont compris dans les plages de validité. La sous-étape 243 consiste à prendre dans chaque histogramme une valeur moyenne de la classe comportant le plus d'occurrences. Dans une quatrième sous-étape 244, un ensemble de points de calcul est sélectionné parmi les points d'intérêt. La détermination des points de calcul consiste à sélectionner les points d'intérêt dont la distance avec le plan du sol moyen $P_m$ est inférieure à une distance prédéterminée $d_g$. Cette distance est, par exemple, la même que la distance $d_p$. Dans une cinquième sous-étape 245, le triplet de paramètres filtrés spatialement $\{\theta, \varphi, h\}_s$, est déterminé à partir des points de calcul. Selon une forme particulière de réalisation, le triplet $\{\theta, \varphi, h\}_s$ est déterminé par la méthode des moindres carrés appliquée aux distances entre les points de calcul et le plan du sol moyen

P_m.

Le système représenté sur la figure permet de mettre en oeuvre le procédé selon l'invention. En particulier, l'étape 21 de sélection de points valides, l'étape 22 de détermination de l'indicateur $R_{3d}$, et l'étape 23 de sélection de points valides peuvent être réalisées par le module 11 ; l'étape 24 de détermination du triplet de paramètres filtrés spatialement $\{\theta, \varphi, h\}_s$ et l'étape 25 de détermination de l'indicateur $R_{pl}$ peuvent être réalisées par le module 12 ; et l'étape 26 de détermination du triplet de paramètres filtrés temporellement $\{\theta, \varphi, h\}_t$ peut être réalisée par le module 13. Les étapes 23, 24 et 26 peuvent être dépendantes des indicateurs $R_{3d}$ et $R_{pl}$. Cette dépendance est représentée sur la figure 1 par des flèches 141, 142 et 143 allant du module 14 de pilotage aux modules 11, 12 et 13, respectivement. Par ailleurs, la détermination de l'indicateur $R_{3d}$ dépend de l'étape 21, et celle de l'indicateur $R_{pl}$ dépend des étapes 21 et 24. Ces dépendances sont représentées par des flèches 144 et 145 allant des modules 11 et 12, respectivement, vers le module 14 de pilotage.

Le système permettant de mettre en oeuvre le procédé selon l'invention peut être implémenté à partir d'éléments matériel et/ou logiciel. Le procédé selon l'invention peut, en particulier, être mis en oeuvre en tant que programme d'ordinateur comportant des instructions pour son exécution. Le programme d'ordinateur peut être enregistré sur un support d'enregistrement lisible par un processeur.

Le procédé de détermination d'un plan du sol vise également à fournir un indicateur $Q_p$ représentatif de la qualité du plan du sol déterminé pour l'image de profondeur courante. Cet indicateur $Q_p$ est déterminé en fonction des indicateurs $R_{3d}$ et $R_{pl}$ déterminés pour l'image de profondeur courante. Il est par exemple défini par la relation suivante :

$$Q_p = R_{pl}.sig(R_{3d}),$$

où $sig$(x) est une fonction sigmoïde modifiée définie comme suit :

$$sig(x) = \frac{1}{1+exp(g.(S_{3d}-x))},$$

avec $g$ un nombre réel compris entre 10 et 100. Ce paramètre $g$ permet de contrôler la sensibilité de l'indicateur $Q_p$ en fonction du nombre de points valides. L'indicateur $Q_p$ peut être utilisé dans des traitements d'image en aval de la détermination du plan du sol. À titre d'exemple, si la détermination du plan du sol est suivie d'un traitement de recherche d'obstacles posés sur le sol, ce traitement peut être adapté en fonction de l'indicateur $Q_p$. Si sa valeur est relativement faible, les obstacles pourront être recherchés avec une marge plus importante de part et d'autre du plan du sol. Inversement, si la valeur de l'indicateur $Q_p$ est relativement forte, la marge peut être réduite, améliorant ainsi la durée du traitement de recherche d'obstacles.

**Revendications**

**1.** Procédé de détermination d'un triplet de paramètres définissant un plan du sol dans un repère tridimensionnel à partir d'une image de profondeur prise dans une séquence d'images, **caractérisé en ce qu'**il comprend :

- une étape (21) de sélection de points valides dans l'image de profondeur courante, les points valides étant les points de l'image dont une distance à un point origine du repère tridimensionnel est comprise entre une distance minimale prédéterminée et une distance maximale prédéterminée,
- une étape (22) de détermination d'un indicateur $R_{3d}$ pour l'image de profondeur courante, ledit indicateur étant fonction du nombre de points valides dans l'image de profondeur courante, et du nombre total de points dans cette image,
- une étape (23) de sélection d'un ensemble de points d'intérêt dans l'image de profondeur courante, chaque point d'intérêt étant sélectionné si une distance entre ledit point d'intérêt et le plan du sol déterminé pour une image antérieure de la séquence est inférieure à un seuil $d_{sel}$,
- une étape (24) de détermination d'un triplet de paramètres filtrés spatialement à partir de points d'intérêt, et
- une étape (26) de détermination d'un triplet de paramètres filtrés temporellement en fonction de l'indicateur $R_{3d}$ déterminé pour l'image de profondeur courante ou pour une image antérieure de la séquence.

**2.** Procédé selon la revendication 1 comprenant, en outre, une étape (25) de détermination d'un indicateur $R_{pl}$ pour l'image de profondeur courante, ledit indicateur étant fonction du nombre de points dans ladite image dont la distance au plan du sol défini par le triplet de paramètres filtrés spatialement est inférieure à une distance $d_p$ prédéterminée, et du nombre de points valides dans cette image, l'étape (26) de détermination du triplet de paramètres filtrés temporellement étant aussi fonction de l'indicateur $R_{pl}$ déterminé pour l'image de profondeur courante ou pour une image antérieure de la séquence.

**3.** Procédé selon la revendication 2, dans lequel l'étape (26) de détermination du triplet de paramètres filtrés temporellement comporte une sous-étape (261) de détermination d'un paramètre d'innovation K, ledit paramètre étant :

- égal à zéro si l'indicateur $R_{3d}$ déterminé pour l'image de profondeur courante ou pour une image antérieure de la séquence est inférieur à un seuil prédéterminé $S_{3d}$, ou si l'indicateur $R_{pl}$ déterminé pour l'image de profondeur courante ou pour une image antérieure de la séquence est inférieur à un seuil prédéterminé $S_{pl}$,
- égal à la valeur de l'indicateur $R_{pl}$ déterminé pour l'image de profondeur courante ou pour une image antérieure de la séquence, moins la valeur du seuil prédéterminé $S_{pl}$ sinon, chaque paramètre filtré temporellement $V_t$ étant déterminé en fonction du paramètre d'innovation K, du paramètre filtré temporellement déterminé pour la précédente image de la séquence $V_{t-1}$, et du paramètre filtré spatialement déterminé pour l'image de profondeur courante de la séquence $V_s$.

4. Procédé selon la revendication 3, dans lequel chaque paramètre filtré temporellement $V_t$ est déterminé par la relation :

$$V_t = V_{t-1}.(1 - K) + V_s.K.$$

5. Procédé selon l'une des revendications 2 à 4, dans lequel l'étape (24) de détermination d'un triplet de paramètres filtrés spatialement comprend :

- une sous-étape (241) de détermination de plusieurs triplets de paramètres à partir de l'ensemble de points d'intérêt, et
- une sous-étape (242) de sélection, pour chaque type de paramètre, des paramètres dont la valeur est comprise dans une plage de validité paramétrable, la plage de validité de chaque type de paramètre étant centrée sur la valeur de ce paramètre déterminée pour une image antérieure de la séquence, et sa largeur étant déterminée en fonction de l'indicateur $R_{pl}$ déterminé pour une image antérieure de la séquence, et de l'indicateur $R_{3d}$ déterminé pour l'image courante ou pour une image antérieure de la séquence.

6. Procédé selon la revendication 5, dans lequel la sous-étape (241) de détermination de plusieurs triplets de paramètres comprend les sous-étapes suivantes :

- détermination (2411) pseudoaléatoire de plusieurs triplets de points dans l'ensemble de points d'intérêts,

- détermination (2412), pour chaque triplet de points, d'un triplet de paramètres définissant un plan du sol passant par les trois points.

7. Procédé selon l'une des revendications 5 et 6, dans lequel l'étape (24) de détermination d'un triplet de paramètres filtrés spatialement comprend, en outre :

- une sous-étape (243) de détermination, pour chaque type de paramètre, d'un paramètre moyen dont la valeur est égale à une valeur moyenne des paramètres sélectionnés, lesdits paramètres moyens définissant un plan du sol moyen $P_m$,
- une sous-étape (244) de sélection d'un ensemble de points de calcul parmi les points d'intérêt, les points de calcul étant les points d'intérêt dont une distance avec le plan du sol moyen $P_m$ est inférieure à une distance prédéterminée $d_g$,
- une sous-étape (245) de détermination du triplet de paramètres filtrés spatialement à partir des points de calcul.

8. Procédé selon la revendication 7, dans lequel le triplet de paramètres filtrés spatialement est déterminé par la méthode des moindres carrés appliquée aux distances entre les points de calcul et le plan du sol moyen $P_m$.

9. Procédé selon l'une des revendications 5 à 8, dans lequel la largeur de la plage de validité de chaque paramètre est :

- augmentée si l'indicateur $R_p$, déterminé pour une image antérieure de la séquence est inférieur à un seuil $S_{pl2}$ prédéterminé et si l'indicateur $R_{3d}$ déterminé pour l'image courante ou pour une image antérieure de la séquence est supérieur à un seuil $S_{3d2}$ prédéterminé,
- diminuée si l'indicateur $R_{pl}$ déterminé pour une image antérieure de la séquence est supérieur au seuil $S_{pl2}$ prédéterminé, et
- inchangée sinon.

10. Procédé selon la revendication 9, dans lequel la diminution et l'augmentation de la largeur de la plage de validité sont bornées.

11. Procédé selon l'une des revendications 2 à 10, dans lequel le seuil $d_{sel}$ est fonction du critère $R_{pl}$ déterminé pour plusieurs images antérieures de la séquence, l'ensemble des points valides de l'image de profondeur courante étant sélectionnés comme points d'intérêt si le critère $R_{pl}$ déterminé pour plusieurs images antérieures de la séquence est inférieur à un seuil $S_{sel}$ prédéterminé.

**12.** Procédé selon l'une des revendications 2 à 11, comprenant une étape supplémentaire de détermination d'un indicateur $Q_p$, représentatif de la qualité du plan du sol déterminé pour l'image de profondeur courante, ledit indicateur $Q_p$ étant déterminé en fonction des indicateurs $R_{3d}$ et $R_{pl}$ déterminés pour l'image de profondeur courante.

**13.** Procédé selon la revendication 12, dans lequel l'indicateur $Q_p$ est déterminé par la relation :

$$Q_p = \frac{R_{pl}}{1+exp\big(g.(S_{3d}-R_{3d})\big)},$$

où *g* est un nombre réel compris entre 10 et 100, et $S_{3d}$ est un seuil prédéterminé.

**14.** Procédé selon l'une des revendications 2 à 13, dans lequel l'indicateur $R_{pl}$ d'une image de profondeur est égal au nombre de points dans ladite image dont la distance au plan du sol défini par le triplet de paramètres filtrés spatialement est inférieur à la distance $d_p$ prédéterminée, sur le nombre de points valides dans cette image.

**15.** Procédé selon l'une des revendications précédentes, dans lequel l'indicateur $R_{3d}$ d'une image de profondeur est égal au nombre de points valides dans cette image sur le nombre total de points dans cette image.

**16.** Système (10) pour la détermination d'un plan du sol dans une séquence d'images **caractérisé en ce qu'**il comporte des moyens (11,12,13,14,15) adaptés pour mettre en oeuvre le procédé selon l'une des revendications 1 à 15.

**17.** Programme d'ordinateur comportant des instructions pour l'exécution du procédé selon l'une quelconque des revendications 1 à 15, lorsque le programme est exécuté par un processeur.

**18.** Support d'enregistrement lisible par un processeur sur lequel est enregistré un programme comportant des instructions pour l'exécution du procédé selon l'une quelconque des revendications 1 à 15, lorsque le programme est exécuté par un processeur.

**Patentansprüche**

**1.** Verfahren zum Ermitteln eines Tripletts von Parametern, die eine Grundebene in einer dreidimensionalen Referenz auf der Basis eines Tiefenbildes definieren, das in einer Folge von Bildern aufgenommen wurde, **dadurch gekennzeichnet, dass** es Folgendes beinhaltet:

- einen Schritt (21) des Auswählens von gültigen Punkten in dem laufenden Tiefenbild, wobei die gültigen Punkte die Punkte des Bildes sind, deren Abstand von einem Ursprungspunkt der dreidimensionalen Referenz innerhalb eines vorbestimmten Mindestabstands und eines vorbestimmten Höchstabstands liegt;
- einen Schritt (22) des Ermittelns eines Indikators $R_{3d}$ für das laufende Tiefenbild, wobei der Indikator von der Anzahl von gültigen Punkten in dem laufenden Tiefenbild und der Gesamtzahl von Punkten in diesem Bild abhängig ist;
- einen Schritt (23) des Auswählens eines Satzes von Punkten von Interesse in dem laufenden Tiefenbild, wobei jeder Punkt von Interesse ausgewählt wird, wenn ein Abstand zwischen dem Punkt von Interesse und der für ein vorheriges Bild der Folge ermittelten Grundebene kleiner ist als eine Schwelle $d_{sel}$;
- einen Schritt (24) des Ermittelns eines Tripletts von räumlich gefilterten Parametern auf der Basis von Punkten von Interesse; und
- einen Schritt (26) des Ermittelns eines Tripletts von zeitlich gefilterten Parametern in Abhängigkeit von dem Indikator $R_{3d}$, der für das laufende Tiefenbild oder für ein vorheriges Bild der Folge ermittelt wurde.

**2.** Verfahren nach Anspruch 1, das ferner einen Schritt (25) des Ermittelns eines Indikators $R_{pl}$ für das laufende Tiefenbild beinhaltet, wobei der Indikator von der Anzahl von Punkten in dem Bild, deren Abstand von der durch das Triplett von räumlich gefilterten Parametern definierten Grundebene kleiner ist als ein vorbestimmter Abstand $d_p$, und von der Anzahl von gültigen Punkten in diesem Bild abhängig ist, wobei der Schritt (26) des Ermittelns des Tripletts von zeitlich gefilterten Parametern auch von dem Indikator $R_{pl}$ abhängig ist, der für das laufende Tiefenbild oder für ein vorheriges Bild der Folge ermittelt wurde.

**3.** Verfahren nach Anspruch 2, wobei der Schritt (26) des Ermittelns des Tripletts von zeitlich gefilterten Parametern einen Teilschritt (261) des Ermittelns eines Neuerungsparameters K beinhaltet, wobei der Parameter:

- gleich null ist, wenn der für das laufende Tiefenbild oder für ein vorheriges Bild der Folge ermittelte Indikator $R_{3d}$ kleiner ist als eine vorbestimmte Schwelle $S_{3d}$ oder wenn der für das laufende Tiefenbild oder für ein vorheriges Bild der Folge ermittelte Indikator $R_{pl}$ kleiner ist als eine vorbestimmte Schwelle $S_{pl}$;
- gleich dem Wert des für das laufende Tiefenbild oder für ein vorheriges Bild der Folge ermittelten Indikators $R_{pl}$ ist, und ansonsten kleiner ist als der Wert der vorbestimmten Schwelle S_pl, wobei jeder zeitlich gefilterte Parameter $V_t$ in Abhängigkeit von dem Neuerungsparameter K, von dem für das vorherige Bild der Folge $V_{t-1}$ ermittelten zeitlich gefilterten Parameter und von dem für das laufende Bild der Folge $V_s$ ermittelten räumlich gefilterten Parameter ermittelt wird.

4. Verfahren nach Anspruch 3, wobei jeder zeitlich gefilterte Parameter $V_t$ anhand der folgenden Relation ermittelt wird:

$$V_t = V_{t-1}.(1 - K) + V_S.K.$$

5. Verfahren nach einem der Ansprüche 2 bis 4, wobei der Schritt (24) des Ermitteins eines Tripletts von räumlich gefilterten Parametern Folgendes beinhaltet:

■ einen Teilschritt (241) des Eimittelns von mehreren Tripletts von Parametern auf der Basis des Satzes von Punkten von Interesse; und
■ einen Teilschritt (242) des Wählens, für jeden Parametertyp, von Parametern, deren Wert innerhalb eines konfigurierbaren Gültigkeitsbereichs liegt, wobei der Gültigkeitsbereich jedes Parametertyps auf dem für ein vorheriges Bild der Folge ermittelten Wert dieses Parameters zentriert ist, und wobei seine Breite in Abhängigkeit von dem für ein vorheriges Bild der Folge ermittelten Indikator R_pl und von dem für das laufende Bild oder dem für ein vorheriges Bild der Folge ermittelten Indikator $R_{3d}$ ermittelt wird.

6. Verfahren nach Anspruch 5, wobei der Teilschritt (241) des Ermittelns von mehreren Tripletts von Parametern die folgenden Teilschritte beinhaltet:

■ pseudozufälliges Ermitteln (2411) von mehreren Tripletts von Punkten in dem Satz von Punkten von Interesse;
■ Ermitteln (2412), für jedes Triplett von Punkten, eines Tripletts von Parametern, die eine durch die drei Punkte verlaufende Grundebene definieren.

7. Verfahren nach einem der Ansprüche 5 und 6, wobei Schritt (24) des Ermittelns eines Tripletts von räumlich gefilterten Parametern ferner Folgendes beinhaltet:

■ einen Teilschritt (243) des Ermittelns, für jeden Parametertyp, eines mittleren Parameters, dessen Wert gleich einem Mittelwert der gewählten Parameter ist, wobei die mittleren Parameter eine mittlere Grundebene P_m definieren;
■ einen Teilschritt (244) des Wählens eines Satzes von Rechenpunkten aus den Punkten von Interesse, wobei die Rechenpunkte die Punkte von Interesse sind, deren Abstand von der mittleren Grundebene P_m kleiner ist als ein vorbestimmter Abstand dg;
■ einen Teilschritt (245) des Ermittelns des Tripletts von räumlich gefilterten Parametern auf der Basis der Rechenpunkte.

8. Verfahren nach Anspruch 7, wobei das Triplett von räumlich gefilterten Parametern mit dem Kleinste-Quadrate-Verfahren ermittelt wird, angewandt auf die Abstände zwischen den Rechenpunkten und der mittleren Grundebene P_m.

9. Verfahren nach einem der Ansprüche 5 bis 8, wobei die Breite des Gültigkeitsbereichs jedes Parameters:

■ erhöht wird, wenn der für ein vorheriges Bild der Folge ermittelte Indikator R_pl kleiner ist als ein vorbestimmter Schwellenwert S_pl2 und wenn der für das laufende Bild oder für ein vorheriges Bild der Folge ermittelte Indikator $R_{3d}$ größer ist als eine vorbestimmte Schwelle $S_{3d2}$;
■ verringern wird, wenn der für ein vorheriges Bild der Folge ermittelte Indikator R_pl größer ist als eine vorbestimmte Schwelle S_pl2; und
■ ansonsten unverändert bleibt.

10. Verfahren nach Anspruch 9, wobei die Verringerung und die Erhöhung der Breite des Gültigkeitsbereichs begrenzt sind.

11. Verfahren nach einem der Ansprüche 2 bis 10, wobei die Schwelle d_sel von dem für mehrere vorherige Bilder der Folge ermittelten Kriterium R_pl abhängig ist, wobei alle gültigen Punkte des laufenden Tiefenbildes als Punkte von Interesse ausgewählt werden, wenn das für mehrere vorherige Bilder der Folge ermittelte Kriterium R_pl kleiner ist als eine vorbestimmte Schwelle S_sel.

12. Verfahren nach einem der Ansprüche 2 bis 11, das einen zusätzlichen Schritt des Ermitteins eines Indikators Q_p beinhaltet, der die Qualität der für das laufende Tiefenbild ermittelten Grundebene repräsentiert, wobei der Indikator Q_p in Abhängigkeit von den für das laufende Tiefenbild ermittelten Indikatoren $R_{3d}$ und R_pl ermittelt wird.

13. Verfahren nach Anspruch 12, wobei der Indikator Q_p mit der folgenden Relation ermittelt wird:

$$Q_p = \frac{R_{pl}}{1+exp(g.(S_{3d}-R_{3d}))},$$

wobei *g* eine reale Zahl zwischen 10 und 100 und $S_{3d}$ eine vorbestimmte Schwelle ist.

**14.** Verfahren nach einem der Ansprüche 2 bis 13, wobei der Indikator $R_{pl}$ eines Tiefenbildes gleich der Anzahl von Punkten in dem Bild ist, deren Abstand von der durch das Triplett von räumlich gefilterten Parametern definierten Grundebene kleiner ist als ein vorbestimmter Abstand $d_p$ dividiert durch die Anzahl von gültigen Punkten in diesem Bild.

**15.** Verfahren nach einem der vorherigen Ansprüche, wobei der Indikator $R_{3d}$ eines Tiefenbildes gleich der Anzahl von gültigen Punkten in diesem Bild dividiert durch die Gesamtzahl von Punkten in diesem Bild ist.

**16.** System (10) zum Ermitteln einer Grundebene in einer Folge von Bildern, **dadurch gekennzeichnet, dass** es Mittel (11, 12, 13, 14, 15) umfasst, die zum Implementieren des Verfahrens nach einem der Ansprüche 1 bis 15 ausgelegt sind.

**17.** Computerprogramm, das Befehle zum Ausführen des Verfahrens nach einem der Ansprüche 1 bis 15 umfasst, wenn das Programm von einem Prozessor ausgeführt wird.

**18.** Prozessorlesbares Aufzeichnungsmedium, auf dem ein Programm aufgezeichnet ist, das Befehle zum Ausführen des Verfahrens nach einem der Ansprüche 1 bis 15 umfasst, wenn das Programm von einem Prozessor ausgeführt wird.

**Claims**

**1.** A method for determining a triplet of parameters defining a ground plane in a three-dimensional reference on the basis of a depth image taken in a sequence of images, **characterised in that** it comprises:

- a step (21) of selecting valid points in the current depth image, said valid points being the points of the image, the distance of which to a point of origin of the three-dimensional reference is within a predetermined minimum distance and a predetermined maximum distance;
- a step (22) of determining an indicator $R_{3d}$ for the current depth image, said indicator being a function of the number of valid points in the current depth image and of the total number of points in this image;
- a step (23) of selecting a set of points of interest in the current depth image, each point of interest being selected if a distance between said point of interest and the ground plane determined for a previous image of the sequence is lower than a threshold $d_{sel}$;
- a step (24) of determining a triplet of spatially filtered parameters on the basis of points of interest; and
- a step (26) of determining a triplet of temporally filtered parameters as a function of the indicator $R_{3d}$ determined for the current depth image or for a previous image of the sequence.

**2.** The method according to claim 1, further comprising a step (25) of determining an indicator $R_{pl}$ for the current depth image, said indicator being a function of the number of points in said image, the distance of which to the ground plane defined by the triplet of spatially filtered parameters is less than a predetermined distance $d_p$, and of the number of valid points in this image, the step (26) of determining the triplet of temporally filtered parameters also being a function of the indicator $R_{pl}$ determined for the current depth image or for a previous image of the sequence.

**3.** The method according to claim 2, wherein the step (26) of determining the triplet of temporally filtered parameters comprises a sub-step (261) of determining an innovation parameter K, said parameter being:

- equal to zero if the indicator $R_{3d}$ determined for the current depth image or for a previous image of the sequence is lower than a predetermined threshold $S_{3d}$, or if the indicator $R_{pl}$ determined for the current depth image or for a previous image of the sequence is lower than a predetermined threshold $S_{pl}$;
- equal to the value of the indicator $R_{pl}$ determined for the current depth image for a previous image of the sequence, otherwise being less than the value of the predetermined threshold $S_{pl}$,

with each temporally filtered parameter $V_t$ being determined as a function of the innovation parameter K of the temporally filtered parameter determined for the preceding image of the sequence $V_{t-1}$ and of the spatially filtered parameter determined for the current depth image of the sequence $V_S$.

**4.** The method according to claim 3, wherein each temporally filtered parameter $V_t$ is determined by the following relation:

$$V_t = V_{t-1}.(1 - K) + V_S.K.$$

**5.** The method according to any one of claims 2 to 4, wherein the step (24) of determining a triplet of spatially filtered parameters comprises:

- a sub-step (241) of determining a plurality of triplets of parameters on the basis of the set of points of interest; and
- a sub-step (242) of selecting, for each type of parameter, parameters, the value of which is within a configurable range of validity, with the range of validity of each type of parameter being centred on the value of this parameter, which value is determined for a previous image of the sequence, and its width being determined as a function of the indicator $R_{pl}$ determined for a previous image of the sequence and as a function of the indicator $R_{3d}$ determined for the current image or for a previous image of the sequence.

**6.** The method according to claim 5, wherein the sub-step (241) of determining a plurality of triplets of parameters comprises the following sub-steps of:

- pseudo-randomly determining (2411) a plurality of triplets of points in the set of points of interest;
- determining (2412), for each triplet of points, a triplet of parameters defining a ground plane passing through the three points.

**7.** The method according to any one of claims 5 and 6, wherein the step (24) of determining a triplet of spatially filtered parameters further comprises:

- a sub-step (243) of determining, for each type of parameter, a mean parameter, the value of which is equal to a mean value of the selected parameters, said mean parameters defining a mean ground plane $P_m$;
- a sub-step (244) of selecting a set of computation points from among the points of interest, with the computation points being the points of interest for which a distance to the mean ground plane $P_m$ is less than a predetermined distance dg;
- a sub-step (245) of determining the triplet of spatially filtered parameters on the basis of the computation points.

**8.** The method according to claim 7, wherein the triplet of spatially filtered parameters is determined using the least squares method applied to the distances between the computation points and the mean ground plane $P_m$.

**9.** The method according to any one of claims 5 to 8, wherein the width of the range of validity of each parameter is:

- increased if the indicator $R_{pl}$ determined for a previous image of the sequence is less than a predetermined threshold $S_{pl2}$ and if the indicator $R_{3d}$ determined for the current image or for a previous image of the sequence is higher than a predetermined threshold $S_{3d2}$;
- decreased if the indicator $R_{pl}$ determined for a previous image of the sequence is higher than the predetermined threshold $S_{pl2}$; and
- is unchanged otherwise.

**10.** The method according to claim 9, wherein the decrease and the increase in the width of the range of validity are limited.

**11.** The method according to any one of claims to 2 to 10, wherein the threshold $d_{sel}$ is a function of the criterion $R_{pl}$ determined for a plurality of previous images of the sequence, with all of the valid points of the current depth image being selected as points of interest if the criterion $R_{pl}$ determined for a plurality of previous images of the sequence is lower than a determined threshold $S_{sel}$.

**12.** The method according to any one of claims 2 to 11, comprising an additional step of determining an indicator $Q_p$ that represents the quality of the ground plane determined for the current depth image, said indicator $Q_p$ being determined as a function of the indicators $R_{3d}$ and $R_{pl}$ determined for the current depth image.

**13.** The method according to claim 12, wherein the indicator $Q_p$ is determined using the following relation:

$$Q_p = \frac{R_{pl}}{1 + exp(g.(S_{3d} - R_{3d}))},$$

where $g$ is a real number between 10 and 100 and $S_{3d}$ is a predetermined threshold.

**14.** The method according to any one of claims 2 to 13, wherein the indicator $R_{pl}$ of a depth image is equal to the number of points in said image, the distance of which to the ground plane defined by the triplet of spatially filtered parameters is less than the predetermined distance $d_p$ divided by the number of valid points in this image.

**15.** The method according to any one of the preceding claims, wherein the indicator $R_{3d}$ of a depth image is equal to the number of valid points in this image divided by the total number of points in this image.

**16.** A system (10) for determining a ground plane in a sequence of images, **characterised in that** it comprises means (11, 12, 13, 14, 15) that are adapted to implement the method according to any one of claims 1 to 15.

17. A computer program comprising instructions for executing the method according to any one of claims 1 to 15 when said programme is executed by a processor.

18. A processor-readable recording medium, on which a programme is recorded that comprises instructions for executing the method according to any one of claims 1 to 15 when said programme is executed by a processor.

**10**

**12**

$11$  $\{x_i, y_i, z_i\}_{i=1..N}$  $\{\Theta, \varphi, h\}_{t-1}$

Image de disparité → **Sélection de points 3D** → **Calcul du plan du sol incluant des phases de filtrage spatial** → **Filtrage temporel des paramètres du plan** → $\{\Theta, \varphi, h\}_t$

$z^{-1}$  15

144  145  $\{\Theta, \varphi, h\}_s$  13

141  142  **Module de pilotage du système**  143

$Q_p$

14

# FIG.1

| SÉLECTION DE POINTS VALIDES | 21 |

| DÉTERMINATION D'UN INDICATEUR $R_{3d}$ | 22 |

| SÉLECTION D'UN ENSEMBLE DE POINTS D'INTÉRÊT | 23 |

| DÉTERMINATION D'UN TRIPLET DE PARAMÈTRES FILTRÉS SPATIALEMENT | 24 |

| DÉTERMINATION D'UN INDICATEUR $R_{pl}$ | 25 |

| DÉTERMINATION D'UN TRIPLET DE PARAMÈTRES FILTRÉS TEMPORELLEMENT EN FONCTION DES INDICATEURS $R_{3d}$ ET $R_{pl}$ | 26 |

# FIG.2

DÉTERMINATION D'UN PARAMÈTRE D'INNOVATION K EN FONCTION DES INDICATEURS $R_{3d}$ ET $R_{pl}$ — 261

DÉTERMINATION DU TRIPLET DE PARAMÈTRES FILTRÉS TEMPORELLEMENT EN FONCTION DU PARAMÈTRE K — 262

## FIG.3

DÉTERMINATION PSEUDOALÉATOIRE DE TRIPLETS DE POINTS D'INTÉRÊT — 2411

DÉTERMINATION, POUR CHAQUE TRIPLET DE POINTS, D'UN PLAN DU SOL — 241 — 2412

FILTRAGE SPATIAL DES PARAMÈTRES — 242

DÉTERMINATION D'UN PLAN DU SOL MOYEN — 243

SÉLECTION D'UN ENSEMBLE DE POINTS DE CALCUL EN FONCTION DU PLAN DU SOL MOYEN — 244

DÉTERMINATION DU TRIPLET DE PARAMÈTRES FILTRÉS SPATIALEMENT À PARTIR DES POINTS DE CALCUL — 245

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. LABAYRADE ; D. AUBERT ; J.-P. TAREL.** Real Time Obstacle Detection in Stereovision on Non Flat Road Geometry Through ''V-Disparity'' Representation. *IEEE Intelligent Vehicles Symposium,* 2002, 646-650
- **N. SUGUMA ; M. SHIMOYAMA ; N. FUJIRAWA.** Obstacle Détection Using Virtual Disparity Image for Non-Flat Road. *IEEE Intelligent Vehicles Symposium,* 2008, 596-601
- **N. SUGUMA ; M. SHIMOYAMA ; N. FUJIRAWA.** Obstacle Detection Using Virtual Disparity Image for Non-Flat Road. *IEEE Intelligent Vehicles Symposium,* 2008, 596-601
- **F. ONIGA ; S. NEDEVSCHI.** Processing Dense Stereo Data Using Elevation Maps : Road Surface, Traffic Isle, and Obstacle Detection. *IEEE Tr. On Vehicular Technology,* 2010, vol. 59 (3), 1172-1182